Europäisches Patentamt

European Patent Office

Office européen des brevets

(11) Veröffentlichungsnummer: **0 445 788 B1**

(19)

(12) **EUROPÄISCHE PATENTSCHRIFT**

(45) Veröffentlichungstag der Patentschrift: **20.12.95**

(21) Anmeldenummer: **91103435.3**

(22) Anmeldetag: **06.03.91**

(51) Int. Cl.⁶: **E02B 3/12**, E02D 31/00

(54) **Wasser- und ölundurchlässige Dichtungsmatte zum Einsatz als Wasser- und Ölsperre**

(30) Priorität: **06.03.90 DE 4006984**

(43) Veröffentlichungstag der Anmeldung:
**11.09.91 Patentblatt 91/37**

(45) Bekanntmachung des Hinweises auf die
Patenterteilung:
**20.12.95 Patentblatt 95/51**

(84) Benannte Vertragsstaaten:
**AT BE CH DE DK ES GR LI LU NL SE**

(56) Entgegenhaltungen:
**DE-A- 1 634 344**
**DE-A- 3 704 503**
**US-A- 4 048 373**
**US-A- 4 344 722**
**US-A- 4 565 468**

(73) Patentinhaber: **NAUE-FASERTECHNIK GMBH &
CO. KG
Wartturmstrasse 1
D-32312 Lübbecke (DE)**

(72) Erfinder: **Heerten, Georg, Dr.
Kaiserstrasse 15
W-4990 Lübbecke 1 (DE)**
Erfinder: **Johannssen, Karsten
Wege 212
W-4993 Rahden (DE)**
Erfinder: **Müller, Volkard
Frankenweg 9
W-4953 Petershagen-Masslingen (DE)**

(74) Vertreter: **Steffens, Joachim, Dr.
Steubstrasse 10
D-82166 Gräfelfing (DE)**

## Beschreibung

Die vorliegende Erfindung betrifft eine wasser- und/oder ölundurchlässige Dichtungsmatte, bestehend im wesentlichen aus einer Trägerschicht, einer Schicht aus quellfähigem Ton und einer Deckschicht, wobei die Träger- und/oder Deckschicht aus einem Vliesstoff und die gegebenenfalls nicht aus einem Vliesstoff bestehende Schicht aus einem Gewebe oder Gewirke besteht und alle drei Schichten miteinander vernadelt sind.

Derartige Dichtungsmatten, die bereits aus der eigenen DE-OS 37 04 503 bekannt sind, bestehen vorzugsweise aus Vliesstoff und zwar sowohl hinsichtlich der Träger- als auch der Deckschicht, andererseits kann aber auch nur die Trägerschicht aus einem Vliesstoff und die Deckschicht aus einem Gewebe oder Gewirke oder die Deckschicht aus einem Vliesstoff und die Trägerschicht aus einem Gewebe oder Gewirke bestehen.

Die dabei als Trägerschicht dienenden Vliesstoffe können ein Flächengewicht von 600 g/m$^2$ und eine Öffnungsweite von 0,09 mm bzw. von 800 g/m$^2$ und 0.08 mm aufweisen.

Die verwendeten Vliesstoffe bestehen vorzugsweise aus Qualitäts-Kunststoff-Fasern, insbesondere aus Polyethylen-Polypropylen-, Polyester-, Polyacryl- und/oder Polyamidfasern. Besonders bevorzugt im Einsatzgebiet der Deponietechnik sind Vliesstoffe aus Polyethylen hoher Dichte (HDPE) oder Polypropylen, die verrottungsfest (resistent) gegen alle im Gewässer und im Boden vorkommenden Substanzen sind und somit nachweislich eine extrem hohe Lebensdauer gewährleisten. Ihre überaus hohe Reißfestigkeit bewirkt eine weitgehende Unempfindlichkeit gegen mechanische Beanspruchungen. Sie sind hochgradig UV-stabil und haben ein hohes spezifisches Gewicht (großer Vorteil beim Unterwassereinbau).

Im Aufbau handelt es sich bei den eingesetzten Vliesstoffen vorzugsweise um durch Vernadelung mechanisch verfestigte Spinnfaservliese. Sie sind so aufgebaut, daß die gekräuselt zusammengefügten Fasern ein Flächengebilde mit unzähligen labyrinthartigen Gängen bilden. Hierbei wird die Bodenstruktur ideal nachgebildet. Das Gefüge der Vliesstoffe läßt sich je nach der Bodenbeschaffenheit gröber oder feiner einstellen, so daß eine optimale Anpassung an die anstehende Bodenart gewährleistet ist. Die mechanische Verfestigung garantiert einen hohen Reibungswert zwischen dem anstehenden Boden und dem Vliesstoff sowie der Abdeckung. Anstelle der durch Vernadelung mechanisch verfestigten Vliesstoffe kann man auch solche Vliesstoffe einsetzen, die mittels der Nähwirktechnik oder durch Verwirbelung mechanisch verfestigt wurden, oder solche Vliesstoffe, die chemisch verfestigt wurden.

Die Schicht aus quellfähigem Ton besteht vorzugsweise aus Bentoniten. Bentonite sind Tone mit merklichem bis hohem Gehalt an Smectit (Montmorillonit), der die Eigenschaften (hohe Quellbarkeit, gutes Wasserbindevermögen, hohe Plastizität) maßgebend bestimmt. Um aus einem in Wasser wenig quellfähigen Erdalkali-Bentonit einen hochquellfähigen Aktivbentonit zu erhalten, werden die Erdalkaliionen der Bentonite durch Alkaliionen, vorzugsweise Natriumionen, ersetzt. Als "hochquellfähiger" Aktivbentonit wird daher Natrium-Bentonit mit seiner stark erhöhten Plastizität, Viskosität, Thixotropie und Wasseraufnahme bevorzugt.

Bei der Herstellung dieser bekannten Dichtungsmatten geht man so vor, daß man auf die Trägerschicht zunächst die Schicht aus trockenem, quellfähigen Ton und dann darauf die Deckschicht aufbringt und anschließend alle drei Schichten in einem Nadelstuhl vernadelt.

Zwar erhält man durch die Vernadelung der drei Schichten im Nadelstuhl bereits einen gewünschten festen mechanischen Zusammenhalt der drei Schichten der Dichtungsmatte und beim Aufquellen des etonits durch Befeuchten einen Quellgegendruck, der eine Wasserundurchlässigkeit dieser bekannten Dichtungsmatten garantiert, doch hat sich in der Praxis gezeigt, daß ein noch stärkerer Verbund der Schichten von Nutzen wäre.

Aufgabe der vorliegenden Erfindung ist es daher, den festen mechanischen Verbund der von Träger- und Deckschicht mit dazwischen eingelagerter Tonschicht zu verbessern.

Diese Aufgabe wird gemäß der vorliegenden Erfindung durch eine spezielle Kombination von Teilchengrößen, Quellvermögen und Schichtdicke der Tonschicht einerseits und der Vliesstoffparameter andererseits gelöst wie definiert in den unabhängigen Ansprüchen 1, 2, 3 und 4. Bevorzugte Ausführungen der Erfindung werden in den abhängigen Ansprüchen beschrieben.

Fig. 1      zeigt in graphischer Darstellung die gewünschten Flächengewichte (Schichtdicken) der eingesetzten quellfähigen Tone in Abhängigkeit vom Quellvermögen dieser eingesetzten Tone (siehe "geeigneter Bereich").

             (A) steht für Quellvermögen des Tons in %.

             (B) steht für das Flächengewicht (g/m$^2$) der quellfähigen Tonschicht, die sich zwischen Trägerschicht und Deckschicht befindet.

Fig. 2      zeigt in graphischer Darstellung, in welchem Verhältnis die Flächengewichte der Vliesstoffe für die Träger- und die Deckschicht zu den wirksamen Öffnungsweiten ($D_w$) der Vliesstoffe stehen (siehe "zulässiger Bereich").

(1) zeigt die untere Grenze des Flächengewichtes (g/m²) für den Vliesstoff, der mit der Abstreiferplatte (auch obere Lochplatte genannt) in Berührung kommt. Dieser Vliesstoff bildet in der Regel die Deckschicht.

(2) zeigt die untere Grenze des Flächengewichtes (g/m²) für den Vliesstoff, der mit der Stichplatte (auch untere Lochplatte genannt) in Berührung kommt. Dieser Vliesstoff bildet in der Regel die Trägerschicht.

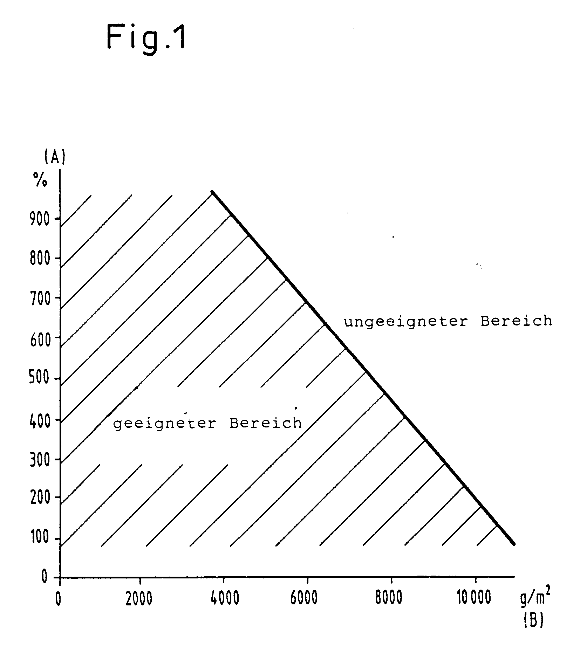

Das in Fig. 1 dargestellte Diagramm zeigt den für die Vernadelungstechnik geeigneten und den ungeeigneten Bereich hinsichtlich der Relation zwischen eingesetzter Tonmenge und Quellvermögen des Tones, die bei der Herstellung der erfindungsgemäßen Dichtungsmatten eingehalten werden soll.

Wie aus dem Diagramm der Fig. 1 ersichtlich ist, kann man einen langfristig wirksamen Verbund zwischen Träger und Abdeckmaterial durch die Bentonitschicht hindurch mit der Vernadelungstechnik nur dann erreichen, wenn die eingetragene Menge des Tons (g/m²) und das Quellvermögen des Tons in geeigneter Realtion stehen. D.h. bei Verwendung eines hochquellfähigen Tons ist die Einstreumenge an Ton vergleichsweise gering, da das hohe Quellvermögen schon bei niedrigen Einstreumengen nach Wasserzutritt den Vernadelungsverbund wieder sprengt. Bei Verwendung von Tonen mit niedrigem Quellvermögen sind dagegen größere Tonmengen einstreubar.

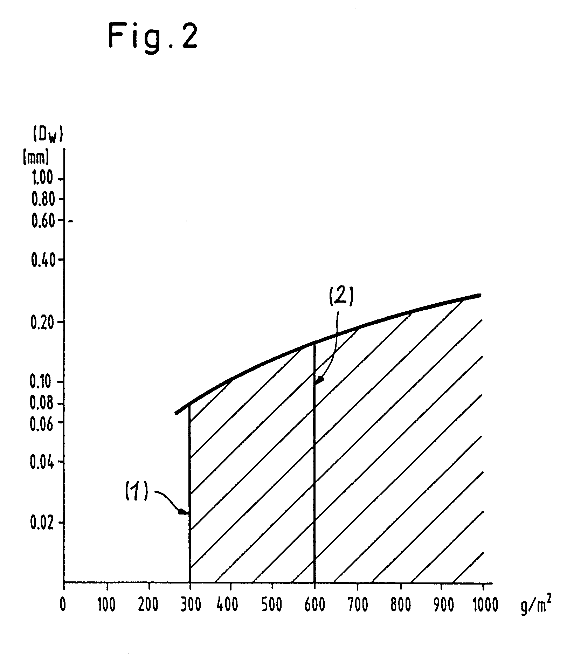

Das in Fig. 2 dargestellte Diagramm zeigt für die erfindungsgemäß eingesetzten Vliesstoffe die geeigneten Kombinationen von Flächengewicht und wirksamer Öffnungsweite ($D_w$) und zwar in Abhängigkeit zur Lage des Vliesstoffes gegenüber der Abstreiferplatte oder der Lochplatte. Die Einhaltung dieser im "zulässigen Bereich" liegenden "Flächengewichte" (g/m²) und "wirksame Öffnungsweiten" ($D_w$ = kennzeichnende Porengröße) dienen der Erzielung eines langfristig wirksamen Vernadelungsverbundes bei gleichzeitig sicherer Kapselung der Tonpartikel im angegebenen Korngrößenbereich (ca. 90 % kleiner als 0,06 mm und ca. 70 % kleiner als 0,002 mm).

Aus der Filtertechnik ist bekannt, daß Partikel einer bestimmten Größe mit relativ dünnen bzw. leichten Produkten bei kleiner wirksamer Öffnungsweite ($D_w$) zurückgehalten werden können. Eine Vergrößerung der wirksamen Öffnungsweite kann zulässig sein, wenn die Dicke bzw. das Flächengewicht des Vliesstoffes gleichzeitig erhöht wird und damit ein längerer Filtrationsweg zur Verfügung steht. Nach umfangreichen Erfahrungen und Versuchen der Anmelderin zur Realisierung der Vernadelung von textilen Trägern mit eingeschlossener Tonschicht ergeben sich unterschiedliche Anforderungen an die einzusetzenden textilen Komponenten in Abhängigkeit von Abstreiferseite bzw. Stichplattenseite der Nadelmaschine. Die aus den Versuchen ermittelten, geeigneten Kombinationen von Flächengewicht und wirksamer Öffnungsweite sind in dem in Fig. 2 dargestellten Diagramm, unterschieden für Abstreiferplattenseite und Stichplattenseite, angegeben.

Beispielsweise kann der als Trägerschicht eingesetzte Vliesstoff ein Flächengewicht von 700 g/m² und maximal eine wirksame Öffungsweite ($D_w$) von 0,18 mm oder eine kleinere wirksame Öffnungsweite aufweisen, z. B. 0,14 oder 0,09 mm etc. Andererseits muß das Flächengewicht der Trägerschicht mindestens 600 g/m² betragen, und darf nicht darunter liegen.

Der als Deckschicht eingesetzte Vliesstoff muß ein Flächengewicht von mindestens 300 g/m² haben. Beispielsweise kann daher die Deckschicht ein Flächengewicht von 400 g/m² und eine wirksame Öffnungsweite ($D_w$) von maximal 0,10 mm oder darunter aufweisen.

Vorzugsweise haben daher die Vliesstoffe ein Flächengewicht von etwa 300 g/m² (Deckschicht) bzw. von etwa 600 g/m² (Trägerschicht) bis etwa 1000 g/m², eine Schichtdicke von etwa 2 bis etwa 8 mm, eine wirksame Öffnungsweite zwischen etwa 0,08 und etwa 1,5 mm, eine Wasserdurchlässigkeit bei einer Belastung von 2 kN/m² zwischen etwa $10^{-3}$ und etwa $10^{-2}$ m/s und sind aus Spinnfasern mit einem Längenschnitt von etwa 60 bis etwa 150 mm hergestellt.

Beispielsweise weist eine Dichtungsmatte gemäß der vorliegenden Erfindung folgende Merkmale auf:

1. Schichtdicke der Bentonitschicht trocken: ca. 2 mm nach drei Stunden Wasserlagerung: ca. 8 mm

2. Schichtdicke der erfindungsgemäßen Dichtungsmatte (mm)

| Auflast | trocken | nach 3 Std. Wasserlagerung |
|---|---|---|
| 2 kN/m² | 9,9 | 14,9 |
| 20 kN/m² | 8,9 | 13,9 |

3. Im nassen (gequollenen) Zustand besteht ein sehr guter Verbund zwischen Trägervliesstoff und Abdeckvliesstoff

4. Faserlänge: 120 mm bis 150 mm.

Da die Vernadelung durch die Bentonitschicht erfolgt, erhält man eine faserverstärkte Dichtungsmatte, die befähigt ist, Schubkräfte von der Deckschicht durch die Bentonitschicht in die Trägerschicht zu übertragen. Beispielsweise betragen die Schubkräfte 120 kN/m$^2$ bei einem entsprechenden Test mit einer Belastung von 200 kN/m$^2$.

Vorzugsweise bestehen sowohl die Trägerals auch die Deckschicht aus einem Vliesstoff. Es kann aber auch ein Aufbau gewünscht sein, bei dem die Deckschicht aus einem Vliesstoff und die Trägerschicht aus einem Gewebe, Gewirke oder einer Kunststoff-Folie besteht. Ebenso kann die Deckschicht aus einem Gewebe, Gewirke oder einer Kunststoff-Folie und die Trägerschicht aus einem Vliesstoff bestehen.

Die erfindungsgemäß verwendeten Vliesstoffe und die Kunststoff-Folie bestehen wie bereits erwähnt vorzugsweise aus synthetischen Harzen, zu denen insbesondere gehören Polyethylene, Polypropylene, Polyester, Polyacrylate und/oder Polyamide. Für Deponien oder ähnlich hoch belastete Umgebungen setzt man hauptsächlich Polyethylene hoher Dichte (PEHD) ein.

Gemäß einer weiteren erfindungsgemäßen Ausführungsform besteht zwar sowohl die Trägerschicht als auch die Deckschicht aus einem Vliesstoff, zusätzlich befindet sich jedoch zwischen Trägerschicht und der Schicht aus quellfähigem Ton ein Gewebe und/oder eine Kunststoff-Folie und/oder eine gewebearmierte Kunststoff-Folie, die ebenfalls mitvernadelt sind, wobei der Vliesstoff für die Trägerschicht außerhalb des "zulässigen Bereichs" des in Fig. 2 dargestellten Diagramms liegen kann.

Dementsprechend kann man gemäß der vorliegenden Erfindung die Dichtungsmatte so gestalten, daß die Trägerschicht ein Vliesstoff außerhalb des "zulässigen Bereichs" des Diagramms gemäß Fig. 2 ist und zwischen der Trägerschicht und der Tonschicht zusätzlich ein Bändchengewebe (textile Rohstoffe beliebig, vorzugsweise Polyolefin) mit einem Flächengewicht von größer als 80 g/m$^2$ mit eingenadelt ist, wobei der Vliesstoff vorzugsweise ein vernadelter Vliesstoff mit einem Flächengewicht von 250 g/m$^2$ ist.

Andererseits kann die Trägerschicht aber auch nur aus einem Bändchengewebe (textiler Rohstoff beliebig, vorzugsweise Polyolefin) mit einem Flächengewicht von nicht kleiner als 150 g/m$^2$ oder nur aus einer Kunststoff-Folie mit einer Dicke von nicht kleiner als 200 $\mu$ bestehen.

Die Trägerschicht, die beim Durchgang durch den Nadelstuhl an der Stichplatte zum Aufliegen kommt, kann somit entweder sein

(1) ein vernadelter Vliesstoff gemäß dem in Fig. 2 dargestellten Diagramm, dessen Faserrohstoff beliebig ist, vorzugsweise jedoch aus Synthesefasern besteht;

(2) ein Bändchengewebe mit Flächengewichten von nicht kleiner als 150 g/m$^2$, dessen textiler Faserrohstoff beliebig ist, vorzugsweise jedoch aus Polyolefinen besteht;

(3) eine Folie mit einer Dicke von nicht kleiner als 200 $\mu$, die aus einem nicht-verrottbaren Kunststoff besteht, vorzugsweise aus einem Polyolefin, insbesondere einem Polyethylen mit hoher Dichte (DEHD);

(4) eine Kombination aus Vliesstoff mit Bändchengewebe und/oder Folie, wobei der Vliesstoff auch Flächengewichte außerhalb des in Fig. 2 dargestellten Diagramms haben kann. Beispiel: Vernadelter Vliesstoff mit 250 g/m$^2$ kombiniert mit Bändchengewebe von nicht kleiner als 80 g/m$^2$; oder

(5) eine Kombination von groben und feinen miteinander vernadelten Vliesstoffen, wobei der eine davon in seinen Eigenschaften dem in Fig. 2 dargestellten Diagramm entsprechen muß und der grobe Vliesstoff vorzugsweise der Bentonitschicht zugewandt ist.

Verwendet man gemäß der vorliegenden Erfindung eine Trägerschicht aus Vliesstoff und Gewebe und/oder Kunststoff-Folien, so vernadelt man vorzugsweise beide Schichten zunächst zusammen während der mechanischen Verfestigung des Vliesstoffes durch Vernadelung. In einem separaten Arbeitsgang bringt man dann die Bentonitschicht auf, deckt diese mit einer weiteren Vliesstoffschicht ab und vernadelt nochmals.

Als quellfähigen Ton verwendet man vorzugsweise Bentonit in gepulverter oder mehliger Form. Insbesondere bevorzugt wird gemäß der vorliegenden Erfindung ein Natrium-aktivierter Bentonit, der eine solche Teilchenverteilung aufweist, daß die Hauptmenge bzw. der überwiegende Teil der Teilchen eine Teilchengröße unterhalb von 0,002 mm (2 Mikron) aufweist. Ein Beispiel hierfür ist ein Bentonit, bei dem mehr als 90 % der Teilchen eine Teilchengröße von kleiner als 0,06 mm und mehr als etwa 70 % der Teilchen eine Teilchengröße von weniger als 0,002 mm aufweisen. Solch ein bevorzugt eingesetzter Natrium-aktivierter Bentonit, der auch in den folgenden Beispielen eingesetzt und mit Bentonit B4 bezeichnet

| Chemische Durchschnittsanalyse: | |
|---|---|
| $SiO_2$ | 56,0 % |
| $Al_2O_3$ | 20,6 % |
| $Fe_2O_3$ | 4,7 % |
| $TiO_2$ | 0,3 % |
| CaO | 2,0 % |
| MgO | 3,4 % |
| $Na_2O$ | 3,0 % |
| $K_2O$ | 1,4 % |
| Glühverlust | 8,6 % |

| Korngrößenaufteilung: | |
|---|---|
| größer als 60 $\mu$m | 1,5 % |
| 60 - 40 $\mu$m | 2 % |
| 40 - 20 $\mu$m | 1,5 % |
| 20 - 10 $\mu$m | 2 % |
| 10 - 2 $\mu$m | 6 % |
| kleiner als 2 $\mu$m | 87 % |

| Mineralogische Zusammensetzung: | |
|---|---|
| Montmorillonit | 70 - 80 % |
| Illit | 10 - 18 % |
| Quarz | 3 - 5 % |
| Sonstige Minerale | 3 % |
| Schichtdicke | ca. 0,8 $g/cm^3$ |
| Korndichte | 2,65 $g/cm^3$ |
| $m^3/t$ in Säcken verpackt | 1,20 |

Die Schicht aus quellfähigem Ton ist im wesentlichen gleichmäßig. In Abhängigkeit von der jeweiligen Anwendung beträgt die Dicke der Tonschicht vorzugsweise 0,5 bis 10 mm. Jedoch kann sie auch geringer oder größer sein, was sowohl von dem eingesetzten Ton als auch von dem jeweiligen Einsatzzweck der Dichtungsmatte abhängt. In diesem Zusammenhang wird darauf hingewiesen, daß beim Aufquellen des bevorzugt eingesetzten Bentonits eine 10- bis 20-fache Volumenvergrößerung stattfindet.

Der quellfähige Ton ist zumindest teilweise in der oder in beiden Vliesstoffschichten eingebettet. Vorzugsweise befinden sich ca. 30 bis ca. 50 % des eingesetzten Tons in der oder den Vliesstoffschichten.

Vorzugsweise ist die Dicke der quellfähigen Tonschicht geringer oder im wesentlichen gleich der Dicke der Vliesstoffschicht bzw. der Summe der Vliesstoffschichten, wenn sowohl die Träger- als auch die Deckschicht aus Vliesstoff besteht.

Eine bevorzugte Ausführungsform der Dichtungsmatte gemäß der vorliegenden Erfindung ist eine solche, die folgende Eigenschaften aufweist:

(a) Sowohl die Trägerschicht als auch die Deckschicht besteht aus einem Vliesstoff.

(b) Die Vliesstoffe haben ein Flächengewicht von etwa 300 $g/m^2$ (Deckschicht) bzw. von etwa 600 $g/m^2$ (Trägerschicht) bis etwa 1000 $g/m^2$, eine Schichtdicke von etwa 2 bis etwa 8 mm, eine wirksame Öffnungsweite zwischen etwa 0,08 und etwa 1,5 mm, eine Wasserdurchlässigkeit bei einer Belastung von 2 $kN/m^3$ zwischen etwa $10^{-3}$ und etwa $10^{-2}$ m/s und sind aus Spinnfasern mit einem Längenschnitt von etwa 60 bis etwa 150 mm hergestellt.

(c) Die Fasern der Vliesstoffe bestehen aus Polyethylen hoher Dichte, Polypropylen oder Polyester.

(d) Der quellfähige Ton ist ein Natrium-aktivierter Bentonit und hat eine solche Teilchengrößenverteilung, daß die Hauptmenge bzw. der überwiegende Teil der Teilchen eine Teilchengröße unterhalb 0,002 mm (2 Mikron) aufweist.

(e) Die Dichte der gleichmäßig verteilten Bentonitschicht beträgt etwa 0,5 bis etwa 10 mm.

(f) Etwa 30 % bis etwa 50 % des eingesetzten Bentonits befindet sich in den Vliesstoffschichten.

5

Wie bereits erwähnt, kann die Trägerschicht auch aus zwei vorher vernadelten Vliesstoffen bestehen, wobei der eine Vliesstoff sehr feine Poren (wirksame Öffnungsweite) gemäß dem in Fig. 2 dargestellten Diagramm und der andere Vliesstoff grobe Poren haben kann, der der quellfähigen Tonschicht zugewandt ist. In diesem Fall kann der großporige Vliesstoff (obere zulässige Porengröße $D_w$ 1,5 mm) 100 %ig mit quellfähigem Ton gefüllt sein.

Die Herstellung der erfindungsgemäßen Dichtungsmatte erfolgt vorzugsweise kontinuierlich. Von einem Vorratssilo wird der Bentonit auf die von einer Vorratsrolle abgewickelte Trägerschicht aufgebracht. Im Anschluß daran wird die ebenfalls von einer Vorratsrolle abgewickelte Deckschicht auf die Bentonitschicht aufgebracht. Das so erhaltene aus drei Schichten bestehende Flächengebilde wird durch einen Nadelstuhl geführt, in dem alle drei Schichten in üblicher Weise vernadelt werden. Ja nach Schichtdicke der Bentonit-Schicht wird das vernadelte Flächengebilde, das die wasserundurchlässige Dichtungsmatte darstellt, auf Rolle gewickelt oder jeweils in der gewünschten Länge abgeschnitten.

Durch die erfindungsgemäße Merkmalskombination erhält man auch bei aufgequollener Bentonitschicht einen besonders guten Faserverbund mit der Möglichkeit einer hervorragenden Schubkraftübertragung von einer Vliesstofflage zu der anderen, d. h. es können z. B. an einer Böschung Schubkräfte von dem Deckvliesstoff durch die Bentonitschicht hindurch in den Trägervliesstoff übertragen werden. Damit handelt es sich gemäß der Erfindung um eine faserarmierte, mineralische Dichtungsmatte mit der Möglichkeit einer Schubkraftübertragung an Böschungen, ohne daß die Gefahr besteht, daß die aufgequollene Bentonitschicht selber zur bevorzugten Gleitebene wird.

Nachfolgend wird der Erfindung weiterhin anhand der Beispiele 1 bis 3 erläutert, ohne sie jedoch darauf zu beschränken. Die in den Beispielen angegebenen Abkürzungen haben folgende Bedeutung:

| PES | = Polyester |
|---|---|
| PP | = Polypropylen |
| PEHD | = Polyethylen hoher Dichte |
| $k_v$-Wert | = Durchlässigkeitskoeffizient |
| Bentonit B4 | siehe vorstehende Beschreibung |

Beispiel 1

In diesem Beispiel wird eine Dichtungsmatte beschrieben, die für dichte Deckwerke an Kanälen, Speicherbecken oder Talsperren geeignet ist. Diese Dichtungsmatte besteht aus einem schweren Träger-Geotextil, das nach den Richtlinien der Bundesanstalt für Wasserbau als geotextiler Filter für den Bodentyp 4 hergestellt wird, und kann direkt mit schweren Steinen bedeckt werden.

Zur Herstellung dieser Dichtungsmatte werden folgende Ausgangsmaterialien eingesetzt:

Trägerschicht: zweischichtiger Vliesstoff und Gewebe aus 800 g/m² PES/PP Fasern
Deckschicht: einschichtiger Vliesstoff aus 300 g/m² PES Fasern
Tonschicht: Bentonit B4 3000 g/m²

Die aus diesen Materialien erhaltene Dichtungsmatte hat folgende Eigenschaften:

```
Flächengewicht (g/m²):              ca. 4 100
Höchstzugkraft (N/10 cm) längs:         1 600
                          quer:         2 500
Dehnung bei Höchstzugkraft (%) längs:     60
                          quer:           50
Schichtdicke (mm):                        10
k_v-Wert (m/s):                       1x10⁻¹⁰
```

Beispiel 2

Zu diesem Beispiel wird eine Dichtungsmatte beschrieben, die geeignet ist für Abdichtungen im Kulturwasserbau, z. B. für

Teiche, Rückhaltebecken oder beim Straßenbau in Trinkwassergewinnungsgebieten, wobei diese Dichtungsmatte mit Deckschichten aus Sand- oder Kies-Ballast versehen werden. Diese Dichtungsmatte ist mit einem leichten Trägermaterial aus miteinander vernadeltem Vliesstoff und Gewebe ausgerüstet.

Zur Herstellung dieser Dichtungsmatte werden folgende Ausgangsmaterialien eingesetzt:

Trägerschicht: Vliesstoff-Gewebe-Verbund aus 400 g/m$^2$ PP-Fasern
Deckschicht: einschichtiger Vliesstoff aus 300 g/m$^2$ PP Fasern
Tonschicht: Bentonit B4
3000 g/m$^2$

Die aus diesen Materialien erhaltene Dichtungsmatte hat folgende Eigenschaften:

```
Flächengewicht:                              ca. 3 700
Höchstzugkraft (N/10 cm) längs:                  1 400
                         quer:                    2 400
Dehnung bei Höchstzugkraft (%) längs:               60
                              quer:                 50
Schichtdicke (mm):                                 7,5
k -Wert (m/s):                                1x10
 v                                                      -10
```

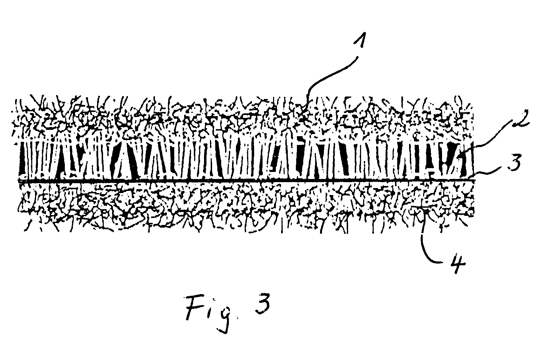

Der Aufbau einer solchen Dichtungsmatte ist in Fig. 3 dargestellt; in Fig.3 haben die Bezugszeichen folgende Bedeutung:

1 Vernadelter Vliesstoff auf Abstreiferseite der Nadelmaschine,
2 Bentonit B4,
3 Bändchengewebe, und
4 mit dem Bändchengewebe 3 vernadelter Vliesstoff auf der Stichplattenseite der Nadelmaschine.

Beispiel 3

In diesem Beispiel wird eine Dichtungsmatte beschrieben, die beispielsweise als Schutzlage für Kunststoffdichtungsbahnen gegenüber groben Dränageschichten (z. B. Kies 16/32 mm) in Deponien Anwendung findet. Bei dieser Dichtungsmatte nutzt man die bekannte hohe Chemikalienbeständigkeit von Polyethylen hoher Dichte (PEHD). Sie wird daher vorzugsweise in Deponien oder ähnlich hoch belasteten Umgebungen eingesetzt werden. Als Schutzlage für Kunststoffdichtungsbahnen konzipiert, bildet diese Dichtungsmatte mit einem Durchlässigkeitsbeiwert von $K_v$ ca. $10^{-10}$ m/s eine zusätzliche wasserundurchlässige Barriere, die mögliche Undichtigkeiten der Kunststoffdichtungsbahn mildert und die Dichtungsbahn vor direktem Kontakt mit verkrusteten Dränschichten schützt.

Zur Herstellung dieser Dichtungsmatte werden folgende Ausgangsmaterialien eingesetzt:

Trägerschicht: einschichtiger Vliesstoff mit Gewebeeinlage aus 800 g/m$^2$ PEHD-Fasern
Deckschicht: einschichtiger Vliesstoff aus 400 g/m$^2$ PEHD-Fasern
Tonschicht: Bentonit B4 3000 g/m$^2$

Die aus diesen Materialien erhaltene Dichtungsmatte hat folgende Eigenschaften:

```
Flächengewicht /g/m²):                    ca. 4 200
Höchstzugkraft /N/10 cm) längs:             1 200
                          quer:              1 800
Dehnung bei Höchstzugkraft (%) längs:        140
                               quer:         100
Schichtdicke (mm):                             9
k_v-Wert (m/s):                        1,0-10^{-10}
```

**Patentansprüche**

1. Wasser- und/oder Ölundurchlässige Dichtungsmatte zum Einsatz als Wasser- und/oder Ölsperre, bestehend aus einer Träger schicht aus Vliesstoff, einer Deckschicht und einer Zwischenschicht aus quellfähigem Ton, wobei die Deckschicht aus einem Vliesstoff, Gewebe oder Gewirke besteht, die eingesetzten Vliesstoffe Flächengewichte und wirksame Öffnungsweiten $D_w$ aufweisen, die in dem mit "zulässiger Bereich" bezeichneten Teil des in Fig. 2 dargestellten Diagramms liegen und alle drei Schichten miteinander vernadelt sind, dadurch gekennzeichnet, daß der als Trägerschicht eingesetzte Vliesstoff ein Flächengewicht von mindestens 600 g/m² und der gegebenenfalls als Deckschicht eingesetzte Vliesstoff ein Flächengewicht von mindestens 300 g/m² hat, der quellfähige Ton in Pulverform mit Partikelgrößen vorliegt, von denen ca. 90 % kleiner als 0,06 mm und ca. 70 % kleiner als 0,002 mm sind, und daß das Flächengewicht des quellfähigen Tons in direkter Relation zum Quellvermögen des Tons gemäß des in Fig. 1 dargestellten Diagramms steht und in dem mit "geeigneter Bereich" bezeichneten schraffierten Teil des Diagramms liegt.

2. Wasser- und/oder ölundurchlässige Dichtungsmatte zum Einsatz als Wasser- und/oder Ölsperre, bestehend aus einer Trägerschicht aus Gewebe oder Gewirke, einer Deckschicht aus Vliesstoff und einer Zwischenschicht aus quellfähigem Ton, wobei der als Deckschicht eingesetzte Vliesstoff ein Flächengewicht und eine wirksame Öffnungsweite $D_w$ aufweist, die in dem mit "zulässiger Bereich" bezeichneten Teil des in Fig. 2 dargestellten Diagramms liegen und alle drei Schichten miteinander vernadelt sind, dadurch gekennzeichnet, daß der als Deckschicht eingesetzte Vliesstoff ein Flächengewicht von mindestens 300 g/m² hat, der quellfähige Ton in Pulverform mit Partikelgrößen vorliegt, von denen ca. 90 % kleiner als 0,06 mm und ca. 70 % kleiner als 0,002 mm sind, und daß das Flächengewicht des zwischen der Träger- und der Deckschicht befindlichen quellfähigen Tons in direkter Relation zum Quellvermögen des Tons gemäß des in Fig. 1 dargestellten Diagramms steht und in dem mit "geeigneter Bereich" bezeichneten schraffierten Teil des Diagramms liegt.

3. Wasser- und/oder ölundurchlässige Dichtungsmatte zum Einsatz als Wasser- und/oder Ölsperre, bestehend im wesentlichen aus einer Trägerschicht aus Kunststoff-Folie, einer Deckschicht aus Vliesstoff und einer Zwischenschicht aus quellfähigem Ton, wobei der als Deckschicht eingesetzte Vliesstoff ein Flächengewicht und eine wirksame Öffnungsweite $D_w$ aufweist, die in dem mit "zulässiger Bereich" bezeichneten Teil des in Fig. 2 dargestellten Diagramms liegen, d.h., daß der als Deckschicht eingesetzte Vliesstoff ein Flächengewicht von mindestens 300 g/m² hat, der quellfähige Ton in Pulverform mit Partikelgrößen vorliegt, von denen ca. 90 % kleiner als 0,06 mm und ca. 70 % kleiner als 0,002 mm sind, und daß das Flächengewicht des zwischen der Träger- und der Deckschicht befindlichen quellfähigen Tons in direkter Relation zum Quellvermögen des Tons gemäß des in Fig. 1 dargestellten Diagramms steht und in dem mit "geeigneter Bereich" bezeichneten schraffierten Teil des Diagramms liegt und alle drei Schichten miteinander vernadelt sind.

4. Wasser- und/oder ölundurchlässige Dichtungsmatte zum Einsatz als Wasser- und/oder Ölsperre, bestehend aus einer Trägerschicht aus Vliesstoff, einer Deckschicht und einer Zwischenschicht aus quellfähigem Ton, wobei die Deckschicht aus einem Vliesstoff, Gewebe oder Gewirke besteht, der

EP 0 445 788 B1

eingesetzte Vliesstoff für die Deckschicht ein Flächengewicht und eine wirksame Öffnungsweite $D_w$ aufweist, die in dem mit "zulässiger Bereich" bezeichneten Teil des in Fig. 2 dargestellten Diagramms liegen und alle Schichten miteinander vernadelt sind, dadurch gekennzeichnet, daß der gegebenenfalls als Deckschicht eingesetzte Vliesstoff ein Flächengewicht von mindestens 300 g/m² hat, der Vliesstoff der Trägerschicht ein Flächengewicht und eine wirksame Öffnungsweite $D_w$ aufweist, die innerhalb oder außerhalb des zulässigen Bereichs nach Fig. 2 liegen können, der quellfähige Ton in Pulverform mit Partikelgrößen vorliegt, von denen ca. 90 % kleiner als 0,06 mm und ca. 70 % kleiner als 0,002 mm sind, daß das Flächengewicht des quellfähigen Tons in direkter Relation zum Quellvermögen des Tons gemäß des in Fig. 1 dargestellten Diagramms steht und in dem mit "geeigneter Bereich" bezeichneten schraffierten Teil des Diagramms liegt, und daß sich zwischen Trägerschicht und der Schicht aus quellfähigem Ton ein Gewebe, Gewirke und/oder eine Kunststoff-Folie befindet.

5. Dichtungsmatte nach Anspruch 1, dadurch gekennzeichnet, daß

(a) sowohl die Träger- als auch die Deckschicht aus Vliesstoffen besteht, wobei

(b) der Vliesstoff der Deckschicht ein Flächengewicht von etwa 300 g/m² bis etwa 1000 g/m² und der Vliesstoff der Trägerschicht ein Flächengewicht von etwa 600 g/m² bis etwa 1000 g/m² aufweist und beide Vliesstoffe eine Schichtdicke von etwa 2 bis etwa 8 mm, eine wirksame Öffnungsweite zwischen etwa 0,08 und etwa 1,5 mm, eine Wasserdurchlässigkeit bei einer Belastung von 2 kN/m² zwischen etwa $10^{-3}$ und etwa $10^{-2}$ m/s aufweisen, und aus Spinnfasern mit einem Längenschnitt von etwa 60 bis etwa 150 mm hergestellt wurden.

6. Dichtungsmatte nach Anspruch 1, dadurch gekennzeichnet, daß der Vliesstoff der Trägerschicht aus zwei vorher vernadelten Viesstoffen besteht, wobei der eine Vliesstoff sehr feine Poren mit einer wirksamen Öffnungsweite gemäß dem in Fig. 2 dargestellten Diagramm und der andere Vliesstoff, der der quellfähigen Tonschicht zugewandt ist, grobe Poren mit einer oberen zulässigen wirksamen Öffnungsweite von $D_w$ 1,5 mm hat, die 100%ig mit quellfähigem Ton gefüllt sind, aufweist.

7. Dichtungsmatte nach Anspruch 2, dadurch gekennzeichnet, daß die Trägerschicht aus einem Bändchengewebe aus beliebigem textilen Rohstoff, vorzugsweise Polyolefin, mit einem Flächengewicht von größer als 150 g/m² besteht.

8. Dichtungsmatte nach Anspruch 3, dadurch gekennzeichnet, daß die Kunststoff-Folie ein Schichtdicke von größer als 200 $\mu$m aufweist.

9. Dichtungsmatte nach Anspruch 4, dadurch gekennzeichnet, daß zwischen der Trägerschicht und der Tonschicht ein Bändchengewebe aus beliebigem textilen Rohstoff, vorzugsweise Polyolefin, mit einem Flächengewicht von größer als 80 g/m² mit eingenadelt ist, wobei der Vliesstoff der Trägerschicht vorzugsweise ein vernadelter Vliesstoff mit einem Flächengewicht von 250 g/m² ist.

10. Dichtungsmatte nach einem oder mehreren der Ansprüche 1 bis 9, dadurch gekennzeichnet, daß die Vliesstoffe mechanisch verfestigte Spinnfaservliese sind.

11. Dichtungsmatte nach einem oder mehreren der Ansprüche 1 bis 10, dadurch gekennzeichnet, daß die Vliesstoffe, die Gewebe, die Gewirke und die Kunststoff-Folie aus nichtverrottbarem Kunststoff, vorzugsweise aus Polyolefinen, insbesondere aus Polypropylen oder aus Polyethylen hoher Dichte, oder aus Polyester bestehen.

**Claims**

1. Water and/or oil-impermeable sealing mat for use as a water and/or oil barrier comprising a substrate layer of non-woven textile material, a cover layer and an intermediate layer of swellable clay, whereof said cover layer consists of a non-woven textile-material, a woven fabric or a knitted fabric, the used non-woven textile materials have an area weight and an efficient opening size $D_w$ which lie in the part marked "permissible range" of the diagram given in Fig. 2 and all three layers are needle punched together, characterized in that the non-woven textile material used as substrate layer has an area weight of at least 600 g/m² and the non-woven textile material optionally used as cover layer has an area weight of at least 300 g/m², the swellable clay is of a powdered form having a particle size of which about 90 % are smaller than 0.06 mm and about 70 % are smaller than 0.002 mm, and the area weight of the swellable clay is in direct relation to the swelling capacity of the clay according to the diagram given in Fig. 1 and lies in the hatched part of the diagram marked "suitable range".

2. Water and/or oil-impermeable sealing mat for use as a water and/or oil barrier comprising a substrate layer of a woven fabric or a knitted fabric, a cover layer of a non-woven textile material and an intermediate layer of swellable clay, whereof the non-woven textile material used as cover layer has an area weight and an efficient opening size $D_w$ which lie in the part marked "permissible range" of the diagram given in Fig. 2 and all three layers are needle punched together, characterized in that the non-woven textile material used as cover layer has an area weight of at least 300 $g/m^2$, the swellable clay is of a powdered form having a particle size of which about 90 % are smaller than 0.06 mm and about 70% are smaller than 0.002 mm, and the area weight of the swellable clay between substrate layer and cover layer is in direct relation to the swelling capacity of the clay according to the diagram given in Fig. 1 and lies in the hatched part of the diagram marked "suitable range".

3. Water and/or oil impermeable sealing mat for use as a water and/or oil barrier comprising a substrate layer of a plastic sheet or film, a cover layer of non-woven textile material and an intermediate layer of swellable clay, whereof said used non-woven textile material has an area weight and an efficient opening size $D_w$ which lie in the part marked "permissible range" of the diagram given in Fig. 2, i.e. that the non-woven textile material used as cover layer has an area weight of at least 300 $g/m^2$, the swellable clay is of a powdered form having a particle size of which about 90% are smaller than 0.06 mm and about 70 % are smaller than 0.002 mm, and the area weight of the swellable clay between substrate layer and cover layer is in direct relation to the swelling capacity of the clay according to the diagram given in Fig. 1 and lies in the hatched part of the diagram marked "suitable range", and all three layers are needle punched together.

4. Water and/or oil-impermeable sealing mat for use as a water and/or oil barrier comprising a substrate layer of non-woven textile material, a cover layer, and an intermediate layer of swellable clay, whereof said cover layer consists of a non-woven textile-material, a woven fabric or a knitted fabric, the non-woven textile material used as cover layer has an area weight and an efficient opening size $D_w$ which lie in the part marked "permissible range" of the diagram given in Fig. 2 and all three layers are needle punched together, characterized in that the non-woven textile material optionally used as cover layer has an area weight of at least 300 $g/m^2$, and the non-woven textile material used as substrate layer has an area weight and an efficient opening size $D_w$ which can lie in or outside the part marked "permissible range" of the diagram given in Fig. 2, the swellable clay is of a powdered form having a particle size of which about 90 % are smaller than 0.06 mm and about 70 % are smaller than 0.002 mm, the area weight of the swellable clay between substrate layer and cover layer is in direct relation to the swelling capacity of the clay according to the diagram given in Fig. 1 and lies in the hatched part of the diagram marked "suitable range", and that between the substrate layer and the layer of swellable clay a woven fabric, a knitted fabric and/or a plastic sheet or film is placed.

5. Sealing mat according to claim 1, wherein
(a) not only the substrate layer but also the cover layer consist of non-woven textile materials, whereof
(b) the non-woven textile material used as cover layer has an area weight of about 300 $g/m^2$ to about 1000 $g/m^2$ and the non-woven textile material used as substrate layer has an area weight of about 600 $g/m^2$ to about 1000 $g/m^2$, and both non-woven textile materials have a thickness of about 2 to about 8 mm, an effective opening size between about 0.08 and about 1.5 mm, a water permeability at a load of 2 $kN/m^2$ between $10^{-3}$ and about $10^{-2}$ m/s and are made of spinning fibers with a length of cut of about 60 to about 150 mm.

6. Sealing mat according to claim 1, wherein the non-woven textile material used as substrate layer consists of two non-woven textile materials needled together, whereof the one non-woven textile material has very fine pores according to the diagram illustrated in Fig. 2 and the other non-woven textile material associated with the bentonite layer has coarse pores with an upper allowable efficient opening size $D_w$ of 1.5 mm filled to 100% with swellable clay.

7. Sealing mat according to claim 2, wherein the substrate layer only consists of a split film woven of any textile raw material, preferably polyolefine, with an area weight higher than 150 $g/m^2$.

8. Sealing mat according to claim 3, wherein the plastic sheet has a thickness of more than 200 $\mu$m.

9. Sealing mat according to claim 4, wherein a split film woven of any textile raw material, preferably polyolefine, with an area weight of more than 80 g/m$^2$ is needle punched between the substrate layer and the clay layer, whereof the non-woven textile material used as substrate layer is preferably a needle punched non-woven textile material with an area weight of 250 g/m$^2$.

10. Sealing mat according to one or more of the claims 1 to 9, wherein the non-woven textile materials are mechanically consolidated staple fiber batts.

11. Sealing mat according to claim 1 to 9, wherein the non-woven textile materials, the woven or knitted fabrics and the plastic sheet consist of not rotting plastic, preferably of polyolefine, especially of polypropylene or high density polyethylene, or of polyester.

**Revendications**

1. Natte d'étanchéité, imperméable à l'eau et à l'huile, en vue de l'utilisation comme barrière d'eau et/ou d'huile, formée d'une couche support en tissu non tissé, d'une couche de couverture et d'une couche intermédiaire en argile capable de gonflement, dans laquelle la couche de couverture est formée d'un tissu non tissé, d'un tissu ou d'un tissu à mailles, les tissus non tissés mis en oeuvre présentent des grammages et des largeurs d'ouverture efficaces $D_W$ qui se situent dans la partie désignée « domaine acceptable » du diagramme représenté à la figure 2, et les trois couches sont cousues les unes avec les autres, caractérisé en ce que le tissu non tissé, mis en oeuvre comme couche support, a un grammage d'au moins 600 g/m$^2$ et le tissu non tissé mis en oeuvre le cas échéant comme couche de couverture, a un grammage d'au moins 300 g/m$^2$, en ce que l'argile capable de gonflement se présente sous forme de poudre avec des tailles de particules parmi lesquelles environ 90 % sont plus petites que 0,O6 mm et environ 70 % sont plus petites que 0,002 mm et en ce que le grammage de l'argile capable de gonflement, se tient en relation directe avec la capacité de gonflement de l'argile conformément au diagramme représenté à la figure 1 et se situe dans la partie hachurée du diagramme désignée comme « domaine approprie ».

2. Natte d'étanchéité imperméable à l'eau et/ou à l'huile, en vue de l'utilisation comme barrière d'eau et/ou d'huile, formée d'une couche support à base de tissu ou de tissu à mailles, d'une couche de couverture en tissu non tissé et d'une couche intermédiaire en argile capable de gonflement, dans laquelle le tissu non tissé mis en oeuvre comme couche de couverture présente un grammage et une largeur d'ouverture efficace $D_W$, qui se situent dans la partie désignée comme « domaine acceptable » du diagramme représenté à la figure 2 et les trois couches sont toutes cousues les unes avec les autres, caractérisée en ce que le tissu non tissé mis en oeuvre comme couche de couverture a un grammage, d'au moins 300 g/m$^2$, que l'argile capable de gonflement se présente sous forme de poudre avec des tailles de particules, parmi lesquelles 90 % environ sont plus petites que 0,06 mm, et environ 70 % sont plus petites que 0,002 mm, et en ce que le grammage de l'argile capable de gonflement qui se trouve entre la couche de support et la couche de couverture est en relation directe avec la capacité de gonflement de l'argile conformément au diagramme représenté à la figure 1 et il se situe dans la partie hachurée du diagramme désignée comme « domaine approprié ».

3. Natte d'étanchéité imperméable à l'eau et/ou à l'huile, en vue de l'utilisation comme barrière pour l'eau et/ou pour l'huile, formée essentiellement d'une couche support en feuille de matière plastique, d'une couche de couverture en tissu non tissé et d'une couche intermédiaire en argile capable de gonflement, dans laquelle le tissu non tissé mis en oeuvre comme couche de couverture, présente un grammage et une largeur d'ouverture efficace $D_W$, qui se situent dans la partie du diagramme représenté à la figure 2, désignée comme « domaine acceptable », c'est-à-dire que le tissu non tissé mis en oeuvre comme couche de couverture, a un grammage d'au moins 300 g/m$^2$, l'argile capable de gonflement se présente sous forme de poudre avec des tailles de particules parmi lesquelles environ 90 % sont plus petites que 0,06 mm, et environ 70 % sont plus petites que 0,002 mm et en ce que le grammage de l'argile capable de gonflement, qui se trouve entre la couche support et la couche de couverture, est en relation directe avec la capacité de gonflement de l'argile conformément au diagramme représenté à la figure 1, et se situe dans la partie du diagramme, hachurée, désignée comme « domaine approprié » et les couches sont toutes cousues les unes avec les autres.

4. Natte d'étanchéité imperméable à l'eau et/ou à l'huile, en vue de l'utilisation comme barrière pour l'eau et/ou pour l'huile, formée d'une couche support en tissu non tissé, d'une couche de couverture et d'une couche intermédiaire en argile capable de gonflement, dans laquelle la couche de couverture consiste en un tissu non tissé, un tissu ou un tissu à mailles, dans laquelle le tissu non tissé mis en oeuvre pour la couche de couverture présente un grammage et une largeur d'ouverture efficace $D_W$ qui se situent dans la partie du diagramme représenté à la figure 2 désignée comme « domaine acceptable » et, dans laquelle toutes les couches sont cousues les unes avec les autres, caractérisée en ce que le tissu non tissé mis en oeuvre éventuellement comme couche de couverture, a un grammage d'au moins 300 g/m², le tissu non tissé de la couche support présente un grammage et une largeur d'ouverture efficace $D_W$, qui peuvent se situer à l'intérieur ou à l'extérieur de la zone acceptable selon la figure 2, l'argile capable de gonflement se présente sous forme de poudre avec des tailles de particules, dont environ 90 % sont plus petites que 0,06 mm et environ 70 % sont plus petites que 0,002 mm et, en ce que le grammage de l'argile capable de gonflement est en relation directe avec la capacité de gonflement de l'argile conformément au diagramme représenté à la figure 1, et se situe dans la partie du diagramme hachurée désignée comme « domaine approprié » et en ce que entre la couche support et la couche en argile capable de gonflement, se trouve un tissu, un tissu à mailles et/ou une feuille de matière plastique.

5. Natte d'étanchéité selon la revendication 1, caractérisée en ce que :

    a) aussi bien la couche support que la couche de couverture est formée de tissu non tissé, dans lesquelles :
    b) le tissu non tissé de la couche de support présente un grammage d'environ 300 g/m² à environ 1 000 g/m² et le tissu non tissé de la couche support présente un grammage d'environ 600 g/m² à environ 1 000 g/m², et les deux tissus non tissés possèdent une épaisseur de couche allant d'environ 2 à environ 8 mm, une largeur d'ouverture efficace comprise entre environ 0,08 et environ 1,5 mm, une perméabilité à l'eau pour une charge de 2 kN/m² comprise entre environ $10^{-3}$ et environ $10^{-2}$ et sont produites à partir de fibres textiles coupées ayant une coupe en long allant d'environ 60 à environ 150 mm.

6. Natte d'étanchéité selon la revendication 1, caractérisée en ce que le tissu non tissé de la couche support consiste en deux tissus non tissés, préalablement cousus, dans lesquels un des tissus non tissés possède des pores très fins avec une largeur d'ouverture efficace conformément au diagramme représenté à la figure 2 et l'autre tissu non tissé qui est tourné vers la couche d'argile capable de gonflement a des pores grossiers avec une largeur d'ouverture supérieure efficace acceptable de $D_W$ = 1,5 mm qui sont remplis à 100 % avec de l'argile capable de gonflement.

7. Natte d'étanchéité selon la revendication 2, caractérisée en ce que la couche support consiste en un tissu de petits rubans en n'importe quelle matière première textile, de préférence en polyoléfine, ayant un grammage supérieur à 150 g/m².

8. Natte d'étanchéité selon la revendication 3, caractérisée en ce que la feuille de matière plastique présente un grammage de plus de 200 $\mu$m.

9. Natte d'étanchéité selon la revendication 4, caractérisée en ce que entre la couche support et la couche d'argile, on a introduit en cousant un tissu en petits rubans en matériau brut textile quelconque, de préférence en polyoléfine, ayant un grammage de plus de 80 g/m², tandis que le tissu non tissé de la couche support est de préférence un tissu non tissé cousu, ayant un grammage de 250 g/m².

10. Natte d'étanchéité selon l'une ou plusieurs des revendications 1 à 9, caractérisée en ce que les tissus non tissés, sont des nappes de fibres textiles coupées consolidées mécaniquement.

11. Natte d'étanchéité selon l'une ou plusieurs des revendications 1 à 10, caractérisée en ce que les tissus non tissés, les tissus, les tissus à mailles et la feuille de matière plastique consistent en une matière plastique non putrescible, de préférence en polyoléfine, en particulier en polypropylène ou en polyéthylène de haute densité ou en polyester.

Fig.1

# Fig.2

Fig. 3